# EUROPEAN PATENT SPECIFICATION

(11) **EP 3 798 124 B1**
(45) Date of publication and mention of the grant of the patent: **18.01.2023**
(21) Application number: 20199318.5
(22) Date of filing: 30.09.2020
(51) Int. Cl.: B64C 39/02, B64C 35/00, B64C 25/54

(54) **AMPHIBIOUS DRONE**
AMPHIBIENDROHNE
DRONE AMPHIBIE

(30) Priority: 30.09.2019 CN 201921690422 U; 30.09.2019 CN 201910939137
(43) Date of publication of application: 31.03.2021
(73) Proprietor: Shanghai Autoflight Co., Ltd., Jinshan District Shanghai 201500 (CN)
(72) Inventor: TIAN, Yu, North Point (HK)
(74) Representative: MERH-IP Matias Erny Reichl Hoffmann Patentanwälte PartG mbB

(56) References cited:
- EP-A1- 3 138 772
- CN-A- 108 725 778
- US-A1- 2009 008 499
- US-A1- 2010 032 522
- US-A1- 2016 375 999

## Description

### TECHNICAL FIELD

The present invention relates to the field of designing and manufacturing drones, in particular to an amphibious drone.

### BACKGROUND

At present, the domestic drone market has been developed for nearly 30 years. It has gradually expanded from the initial military field to the consumer field. The drone market has become increasingly popular. The recognition and demand for drones by ordinary people has gradually increased, and even has exponential growth. Furthermore, drones have low cost and high efficiency, no risk of casualties, strong survivability, good maneuverability, and convenient use. Therefore, drones are widely used in police, agriculture, geology, electricity, disaster relief, video shooting and other industries.

With the rapid development of related technologies of drones at home and abroad, the types of drone systems are also increasing. At present, water drones account for the vast majority of the market, and some floating drones have also appeared on the market. However, there is always an impassable horizontal groove between water drones and land drones, because almost all drones only have a single take-off and landing condition, and it is difficult to achieve the ability to take off and land on land and water at the same time. Some existing drones can only use the front or rear propellers of the fuselage as a power device to provide forward power during the taxiing takeoff or landing phase. When the propeller of the fuselage cannot be operated due to the condition limitation of the water area, the takeoff on the water surface cannot be realized and the takeoff ability is lost. Moreover, because a device that can float on the water surface, such as an air cushion, is usually installed below the fuselage of the water drone, the water drone cannot land and take off on land due to the limitation of the device. US 2009/ 008 499 A1 relates to an air vehicle, which has a plurality of propellers positioned around a main airframe, which can provide vertical thrust and/or horizontal thrust. CN 108 725 778 A relates to an amphibious unmanned aircraft with canards and changeable dihedral angles on wings. US 2010/ 032 522 A1 relates to a centrally motor driven thruster apparatus mounted in to a hull of a float of a seaplane including floatplanes and amphibious aircraft.

### SUMMARY

The technical problem to be solved by the present invention is to overcome the defect that the drone in the prior art cannot realize the take-off and landing on both water and land at the same time, and to provide an amphibious drone.

The present invention solves the above technical problems through the following technical solutions:

An amphibious drone, comprising a fuselage, a vertical tail and a wing, wherein the amphibious drone is equipped with a take-off and landing device, the take-off and landing device is provided on the lower surface of one or more of the fuselage, the vertical tail and the wing, the take-off and landing device comprises a buoyancy unit and a power device, and the power device is capable of generating thrust to push the buoyancy unit to move. The installation of the take-off and landing device can realize that the buoyancy unit serves as a buoyancy device to support the drone when the amphibious drone is floating on the water. The take-off and landing device can also be used as a support device when the drone is landing on land. Since the take-off and landing device has its own power device, the power device can directly drive the drone to move and take off and land by driving the buoyancy unit to move.

The take-off and landing device is detachably connected to the fuselage and/or the vertical tail and/or the wing. The detachable connection allows the drone to detach the take-off and landing device when it does not need to land on water, reducing the weight of the drone to achieve a lighter flight effect. The take-off and landing device is reinstalled before the flight that requires landing on water, and is convenient and practical.

Preferably, a bump is provided on the take-off and landing device, the lower surface of the fuselage and/or the vertical tail and/or the wing is provided with a neck, and when the take-off and landing device and the fuselage and/or the vertical tail and/or the wing are in a connected state, the bump is provided in the neck. The bump and the neck are provided so that the take-off and landing device and the fuselage and/or the vertical tail and/or the wing are connected quickly and sufficiently, and can realize the quick disassembly and assembly between the take-off and landing device and the drone.

Moreover, the buoyancy unit is an open hollow structure, and at least a part of the power device is located in the intermediate space of the buoyancy unit. A part of the power device is installed in the intermediate space of the buoyancy unit to realize that when the power device is started, an air or water flow is formed in the open hollow space of the buoyancy unit. The thrust generated by the air or water flow pushes the power device to move forward and then drives the amphibious drone to move forward.

Preferably, the power device comprises a thruster, and the thruster is provided in the intermediate space of the buoyancy unit.

Preferably, the thruster is a propeller system.

Preferably, the power device further comprises a power connector, the power connector is located at the connection position between the take-off and landing device and the fuselage and/or the vertical tail and/or the wing, the thruster and the power connector are connected by a power line, a power connector is further provided at the connection position between the fuselage and/or the vertical tail and/or the wing and the take-off and landing device, and the power device and the fuselage and/or the vertical tail and/or the wing are electrically connected through the connection state of the power connector. The power connector is provided to supply power to the thruster through the drone so that the thruster operates. Moreover, because the power is directly supplied by the drone, the power system in the power device is reduced, the possibility of the power system touching water is reduced and the service life is increased.

Preferably, the power device further comprises a main engine, the main engine is located inside the buoyancy unit, the main engine and the thruster are connected through a power line, and the main engine is capable of generating electricity to drive the thruster to move. The main engine is installed in the power device, so that the power system is self-powered, providing powerful electricity, and strengthening the operating power of the power device.

Preferably, the buoyancy unit is a pontoon.

Preferably, the amphibious drone is equipped with one of the take-off and landing devices, the take-off and landing device is provided on the lower surface of the fuselage, and the take-off and landing device is located directly below the central axis of the amphibious drone. The amphibious drone is equipped with a take-off and landing device to achieve the effect of light structure and quick disassembly and assembly.

Preferably, the amphibious drone comprises at least two of the take-off and landing devices, and all the take-off and landing devices are symmetrically arranged along the central axis of the amphibious drone. The installation of two or more take-off and landing devices can not only ensure that the drone has a better water surface support effect, but also the increase of the take-off and landing devices strengthens the starting power, and the drone takes off and lands faster.

Preferably, the take-off and landing device is symmetrically provided directly below the vertical tail along the central axis of the drone.

On the basis of conforming to common knowledge in the field, the above preferred conditions can be combined arbitrarily to obtain preferred examples of the present invention.

The positive progress effect of the present invention is that the amphibious drone provided by the present invention installs the take-off and landing device on the lower surface of the drone, and realizes the water support of the drone by symmetrically providing the take-off and landing device. At the same time, the take-off and landing device is further provided with a power device for pushing the drone to be started. The amphibious drone can take off and land by relying on the take-off and landing device. In addition, the take-off and landing device can be disassembled to adapt to different usage conditions, and it is convenient to use and is strong in practicability.

### BRIEF DESCRIPTION OF THE DRAWINGS

FIG. 1 is a schematic diagram of the structure of an amphibious drone according to the present invention.
FIG. 2 is a bottom diagram of an amphibious drone according to the present invention.
FIG. 3 is a schematic structural diagram of a take-off and landing device of an amphibious drone according to the present invention.
FIG. 4 is a schematic structural diagram of a take-off and landing device of an amphibious drone according to the present invention.

Description of reference numbers:
Fuselage 1
Vertical tail 2
Wing 3
Take-off and landing device 4
Buoyancy unit 41
Thruster 42
Power connector 43
Bump 44
Neck 5

### DESCRIPTION OF THE EMBODIMENTS

The present invention will be more clearly and completely described by means of two preferred embodiments in conjunction with the accompanying drawings hereinafter, but the present invention is not limited to the scope of the embodiments.

### Embodiment 1

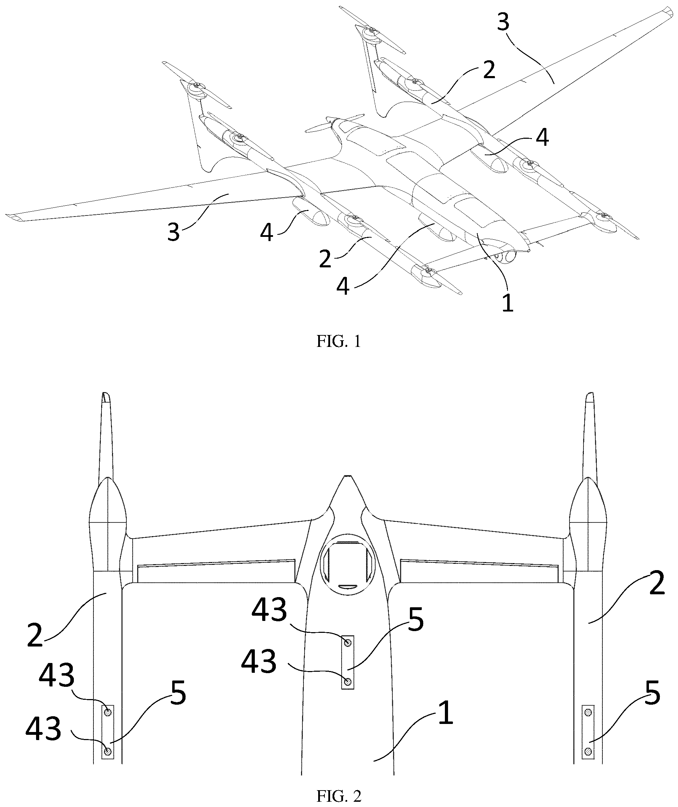

As shown in FIG. 1, the present invention provides an amphibious drone, comprising a fuselage 1, a vertical tail 2 and a wing 3. The amphibious drone is equipped with a take-off and landing device 4, which is provided on the lower surface of one or more of the fuselage 1, the vertical tail 2 and the wing 3. The take-off and landing device 4 comprises a buoyancy unit 41 and a power device, and the power device is capable of generating thrust to push the buoyancy unit 41 to move. The installation of the take-off and landing device 4 can realize that the buoyancy unit 41 serves as a buoyancy device to support the drone when the amphibious drone is floating on the water. The take-off and landing device 4 can also be used as a support device when the drone is landing on land. Since the take-off and landing device 4 has its own power device, the power device can directly drive the drone to move and take off and land by driving the buoyancy unit 41 to move.

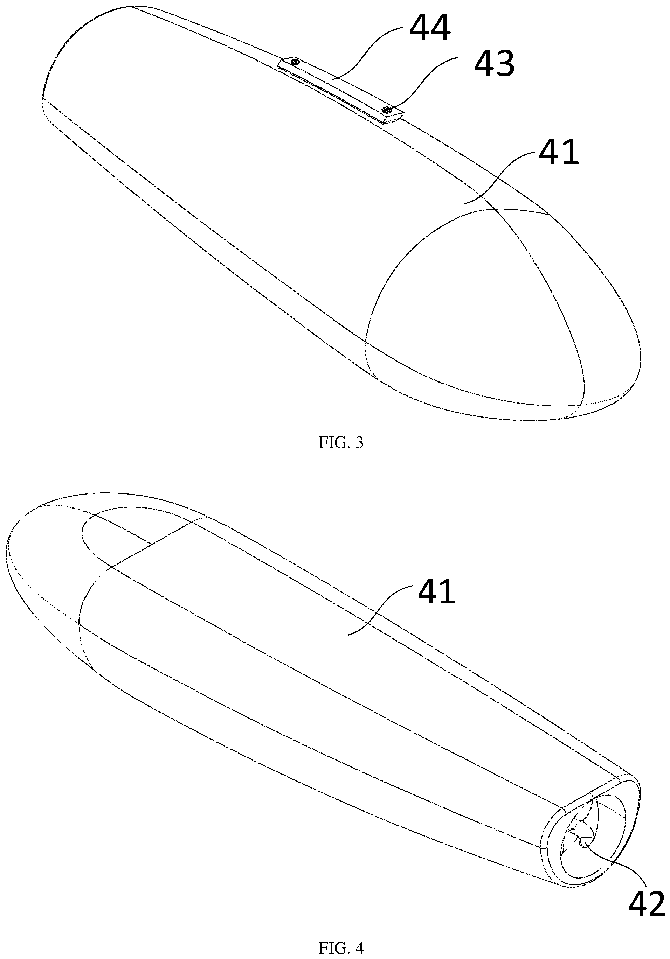

As shown in FIGS. 2 to 4, further, the take-off and landing device 4 is detachably connected to the fuselage 1 and/or the vertical tail 2 and/or the wing 3. The detachable connection allows the drone to detach the take-off and landing device 4 when it does not need to land on water, reducing the weight of the drone to achieve a lighter flight effect. The take-off and landing device is reinstalled before the flight that requires landing on water, and is convenient and practical. In this embodiment, a bump 44 is provided on the take-off and landing device 4, the lower surface of the fuselage 1 and/or the vertical tail 2 and/or the wing 3 is provided with a neck 5, and when the take-off and landing device 4 and the fuselage 1 and/or the vertical tail 2 and/or the wing 3 are in a connected state, the bump 44 is provided in the neck 5. The bump 44 and the neck 5 are provided to be connected quickly and sufficiently, and can realize the quick disassembly and assembly between the take-off and landing device 4 and the drone body. In other embodiments, other connection methods can also be used, such as lock connection.

The buoyancy unit 41 is an open hollow structure, and at least a part of the power device is located in the intermediate space of the buoyancy unit 41. A part of the power device is installed in the intermediate space of the buoyancy unit 41 to realize that when the power device is started, an air or water flow is formed in the open hollow space of the buoyancy unit 41. The thrust generated by the air or water flow pushes the power device to move forward and then drives the amphibious drone to move forward.

The power device comprises a thruster 42 and a power connector 43, and the thruster 42 is provided in the intermediate space of the buoyancy unit 41. Preferably, the thruster 42 uses a propeller system. The power connector 43 is located at the connection position between the take-off and landing device 4 and the amphibious drone, that is, on the surface of the bump 44. The thruster 42 and the power connector 43 are connected by a power line. A power connector 43 is further provided at the connection position between the fuselage 1 and/or the vertical tail 2 and/or the wing 3 and the take-off and landing device 4, that is, on the surface of the neck 5. The power device and the fuselage 1 and/or the vertical tail 2 and/or the wing 3 are electrically connected through the connection state of the power connector 43, that is, when they are in the connected state, the bump 44 is located in the neck 5. At the same time, the two power connectors 43 at corresponding positions are in contact with each other, so as to realize the power connection. The power connector 43 is provided to supply power to the thruster 42 through the drone so that the thruster 42 operates. Moreover, because the power is directly supplied by the drone, the power system in the power device is reduced, the possibility of the power system touching water is reduced and the service life is increased.

Further, in this embodiment, the buoyancy unit 41 is a float.

Further, the amphibious drone comprises at least two of the take-off and landing devices 4, and all the take-off and landing devices 4 are symmetrically arranged along the central axis of the amphibious drone. The installation of two or more take-off and landing devices 4 can not only ensure that the drone has a better water surface support effect, but also the increase of the take-off and landing devices 4 strengthens the starting power, and the drone takes off and lands faster. The take-off and landing device 4 can be provided on the lower surface of the fuselage 1, and can be provided directly below the vertical tail 2 along the central axis of the drone. In this embodiment, while a take-off and landing device 4 is provided on the lower surface of the fuselage 1, two take-off and landing devices 4 are further provided symmetrically below the vertical tail 2. In other embodiments, a take-off and landing device 4 can also be provided on the lower surface of the wing 3. At the same time, the amphibious drone can also be provided with only one take-off and landing device 4 so that it is located directly below the central axis of the drone to achieve the effect of light structure and quick disassembly and assembly.

### Embodiment 2

The structure of this embodiment is basically the same as that of Embodiment 1. The difference is that the amphibious drone of the present invention does not comprise the power connector 43, the power device comprises the thruster 42 and the main engine, the main engine is located inside the buoyancy unit 41, the main engine and the thruster 42 are connected through a power line, and the main engine is capable of generating electricity to drive the thruster 42 to move. The main engine is installed in the power device, so that the power system is self-powered, providing powerful electricity, and strengthening the operating power of the power device.

Although the specific embodiments of the present invention have been described above, those skilled in the art should understand that this is only an example, and the protection scope of the present invention is defined by the appended claims.

## Claims

1. An amphibious drone, comprising a fuselage, a vertical tail and a wing, wherein the amphibious drone is equipped with a take-off and landing device (4), the take-off and landing device (4) is provided on the lower surface of one or more of the fuselage (1), the vertical tail (2) and the wing (3), the take-off and landing device (4) comprises a buoyancy unit (41) and a power device, and the power device is capable of generating thrust to push the buoyancy unit (41) to move forward, wherein
the take-off and landing device (4) is detachably connected to the fuselage (1) and/or the vertical tail (2) and/or the wing (3), and wherein
the buoyancy unit (41) is an open hollow structure, and at least a part of the power device is located in the intermediate space of the buoyancy unit (41).

2. The amphibious drone according to claim 1, wherein a bump (44) is provided on the take-off and landing device (4), the lower surface of the fuselage (1) and/or the vertical tail (2) and/or the wing (3) is provided with a neck (5), and when the take-off and landing device (4) and the fuselage (1) and/or the vertical tail (2) and/or the wing (3) are in a connected state, the bump (44) is provided in the neck (5).

3. The amphibious drone according to claim 1, wherein the power device comprises a thruster (42), and the thruster (42) is provided in the intermediate space of the buoyancy unit (41).

4. The amphibious drone according to claim 3, wherein the thruster (42) is a propeller system.

5. The amphibious drone according to claim 3, wherein the power device further comprises a power connector (43), the power connector (43) is located at the connection position between the take-off and landing device (4) and the fuselage (1) and/or the vertical tail (2) and/or the wing (3), the thruster (42) and the power connector (43) are connected by a power line, a power connector (43) is further provided at the connection position between the fuselage (1) and/or the vertical tail (2) and/or the wing (3) and the take-off and landing device (4), and the power device and the fuselage (1) and/or the vertical tail (2) and/or the wing (3) are electrically connected through the connection state of the power connector (43).

6. The amphibious drone according to claim 3, wherein the power device further comprises a main engine, the main engine is located inside the buoyancy unit (41), the main engine and the thruster (42) are connected through a power line, and the main engine is capable of generating electricity to drive the thruster (42) to move.

7. The amphibious drone according to any of the previous claims, wherein the buoyancy unit (41) is a pontoon.

8. The amphibious drone according to claim 1, wherein the amphibious drone is equipped with one of the take-off and landing devices (4), the take-off and landing device (4) is provided on the lower surface of the fuselage (1), and the take-off and landing device (4) is located directly below the central axis of the amphibious drone.

9. The amphibious drone according to claim 1, wherein the amphibious drone comprises at least two of the take-off and landing devices (4), and all the take-off and landing devices (4) are symmetrically arranged along the central axis of the amphibious drone.

10. The amphibious drone according to claim 9, wherein the take-off and landing device is symmetrically provided directly below the vertical tail (2) along the central axis of the drone.

## Patentansprüche

1. Amphibiendrohne, die einen Rumpf, ein Seitenleitwerk und einen Flügel umfasst, wobei die Amphibiendrohne mit einer Start- und Landevorrichtung (4) ausgestattet ist, die Start- und Landevorrichtung (4) auf der unteren Oberfläche des Rumpfs (1) und/oder des Seitenleitwerks (2) und/oder des Flügels (3) vorgesehen ist, die Start- und Landevorrichtung (4) eine Auftriebseinheit (41) und eine Leistungsvorrichtung umfasst und die Leistungsvorrichtung Schub erzeugen kann, um die Auftriebseinheit (41) zu drücken, sich vorwärts zu bewegen, wobei
die Start- und Landevorrichtung (4) lösbar mit dem Rumpf (1) und/oder dem Seitenleitwerk (2) und/oder dem Flügel (3) verbunden ist und wobei
die Auftriebseinheit (41) eine offene hohle Struktur ist und sich mindestens ein Teil der Leistungsvorrichtung in dem Zwischenraum der Auftriebseinheit (41) befindet.

2. Amphibiendrohne nach Anspruch 1, wobei auf der Start- und Landevorrichtung (4) ein Höcker (44) vorgesehen ist, die untere Oberfläche des Rumpfs (1) und/oder des Seitenleitwerks (2) und/oder des Flügels (3) mit einer Kerbe (5) versehen ist und dann, wenn die Start- und Landevorrichtung (4) und der Rumpf (1) und/oder das Seitenleitwerk (2) und/oder der Flügel (3) in einem verbundenen Zustand sind, der Höcker (44) in der Kerbe (5) vorgesehen ist.

3. Amphibiendrohne nach Anspruch 1, wobei die Leistungsvorrichtung eine Schubdüse (42) umfasst und die Schubdüse (42) in dem Zwischenraum der Auftriebseinheit (41) vorgesehen ist.

4. Amphibiendrohne nach Anspruch 3, wobei die Schubdüse (42) ein Propellersystem ist.

5. Amphibiendrohne nach Anspruch 3, wobei die Leistungsvorrichtung ferner einen Leistungsverbinder (43) umfasst, sich der Leistungsverbinder (43) an der Verbindungsposition zwischen der Start- und Landevorrichtung (4) und dem Rumpf (1) und/oder dem Seitenleitwerk (2) und/oder dem Flügel (3) befindet, die Schubdüse (42) und der Leistungsverbinder (43) durch eine Leistungsleitung verbunden sind, ein Leistungsverbinder (43) ferner an der Verbindungsposition zwischen dem Rumpf (1) und/oder dem Seitenleitwerk (2) und/oder dem Flügel (3) und der Start- und Landevorrichtung (4) vorgesehen ist und die Leistungsvorrichtung und der Rumpf (1) und/oder das Seitenleitwerk (2) und/oder der Flügel (3) durch den Verbindungszustand des Leistungsverbinders (43) elektrisch verbunden sind.

6. Amphibiendrohne nach Anspruch 3, wobei die Leistungsvorrichtung ferner eine Hauptkraftmaschine umfasst, sich die Hauptkraftmaschine in der Auftriebseinheit (41) befindet, die Hauptkraftmaschine und die Schubdüse (42) durch eine Leistungsleitung verbunden sind und die Hauptkraftmaschine Elektrizität erzeugen kann, um die Schubdüse (42) anzutreiben, sich zu bewegen.

7. Amphibiendrohne nach einem der vorhergehenden Ansprüche, wobei die Auftriebseinheit (41) ein Schwimmkörper ist.

8. Amphibiendrohne nach Anspruch 1, wobei die Amphibiendrohne mit einer der Start- und Landevorrichtungen (4) ausgestattet ist, die Start- und Landevorrichtung (4) auf der unteren Oberfläche des Rumpfs (1) vorgesehen ist und sich die Start- und Landevorrichtung (4) direkt unter der Mittelachse der Amphibiendrohne befindet.

9. Amphibiendrohne nach Anspruch 1, wobei die Amphibiendrohne mindestens zwei Start- und Landevorrichtungen (4) umfasst und alle Start- und Landevorrichtungen (4) entlang der Mittelachse der Amphibiendrohne symmetrisch angeordnet sind.

10. Amphibiendrohne nach Anspruch 9, wobei die Start- und Landevorrichtung symmetrisch direkt unter dem Seitenleitwerk (2) entlang der Mittelachse der Drohne vorgesehen ist.

## Revendications

1. Drone amphibie, comprenant un fuselage, une queue verticale et une voilure, dans lequel le drone amphibie est équipé d'un dispositif de décollage et d'atterrissage (4), le dispositif de décollage et d'atterrissage (4) est prévu sur la surface intérieure d'un ou de plusieurs éléments parmi le fuselage (1), la queue verticale (2) et la voilure (3), le dispositif de décollage et d'atterrissage (4) comprend une unité flottante (41) et un dispositif de puissance, et le dispositif de puissance est capable de générer une poussée pour propulser l'unité flottante (41) et le déplacer vers l'avant, dans lequel
le dispositif de décollage et d'atterrissage (4) est connecté de manière détachable au fuselage (1) et/ou à la queue verticale (2) et/ou à la voilure (3), et dans lequel
l'unité flottante (41) est une structure creuse ouverte, et au moins une partie du dispositif de puissance est située dans l'espace intermédiaire de l'unité flottante (41).

2. Drone amphibie selon la revendication 1, dans lequel une bosse (44) est prévue sur le dispositif de décollage d'atterrissage (4), la surface inférieure du fuselage (1) et/ou la queue verticale (2) et/ou la voilure est/sont dotée(s) d'un collet (5), et quand le dispositif de décollage et d'atterrissage (4) et le fuselage (1) et/ou la queue verticale (2) et/ou la voilure (3) sont dans un état connecté, la bosse (44) est prévue dans le collet (5).

3. Drone amphibie selon la revendication 1, dans lequel le dispositif de puissance comprend un propulseur (42), et le propulseur (42) est prévu dans l'espace intermédiaire de l'unité flottante (41).

4. Drone amphibie selon la revendication 3, dans lequel le propulseur (42) est un système à hélice.

5. Drone amphibie selon la revendication 3, dans lequel le dispositif de puissance comprend en outre un connecteur de puissance (43), le connecteur de puissance (43) est situé au niveau de la position de connexion entre le dispositif de décollage et d'atterrissage (4) et le fuselage (1) et/ou la queue verticale (2) et/ou la voilure (3), le propulseur (42) et le connecteur de puissance (43) sont connectés via une ligne de puissance, un connecteur de puissance (43) est prévu en outre au niveau de la position de connexion entre le fuselage (1) et/ou la queue verticale (2) et/ou le voilure (3) et le dispositif de décollage et d'atterrissage (4), et le dispositif de puissance et le fuselage (1) et/ou la queue verticale (2) et/ou le voilure (3) sont connectés électriquement par le bais de l'état de connexion du connecteur de puissance (43).

6. Drone amphibie selon la revendication 3, dans lequel le dispositif de puissance comprend en outre un moteur principal, le moteur principal est situé à l'intérieur de l'unité flottante (41), le moteur principal et le propulseur (42) sont connectés via une ligne de puissance, et le moteur principal est capable de générer de l'électricité pour entraîner le propulseur (42) et le faire se déplacer.

7. Drone amphibie selon l'une quelconque des revendications précédentes, dans lequel l'unité flottante (41) est un flotteur.

8. Drone amphibie selon la revendication 1, dans lequel le drone amphibie est équipé d'un des dispositifs de décollage et d'atterrissage (4), le dispositif de décollage et d'atterrissage (4) est prévu sur la surface inférieure du fuselage (1), et le dispositif de décollage et d'atterrissage (4) est situé directement en dessous de l'axe central du drone amphibie.

9. Drone amphibie selon la revendication 1, dans lequel le drone amphibie comprend au moins deux des dispositifs de décollage et d'atterrissage (4), et tous les dispositifs de décollage et d'atterrissage (4) sont agencés symétriquement le long de l'axe central du drone amphibie.

10. Drone amphibie selon la revendication 9, dans lequel le dispositif de décollage et atterrissage et prévu symétriquement directement en dessous de la queue verticale (2) le long de l'axe central du drone.
